# EUROPEAN PATENT APPLICATION

(11) **EP 3 742 330 A1**
(43) Date of publication of application: **25.11.2020**
(21) Application number: 19175960.4
(22) Date of filing: 22.05.2019
(51) Int. Cl.: G06K 9/00, G06K 9/03, G06T 7/00

(54) **AUTOMATIC DAMAGE DETECTION FOR CARS**

(71) Applicant: Aivious GmbH, 81373 München (DE)
(72) Inventor: Wilkens, Patrick, 80469 München (DE); Ballmann, Simon, 81371 München (DE)
(74) Representative: Valvoda, Jakob

(57) **Abstract**

A method for detecting damages of an object is disclosed. The method includes the steps of obtaining at least two first views of the object at a first time, determining a first defect fingerprint based on the at least two first views, wherein the first defect fingerprint comprises defect features of the object and is determined using a convolutional neural network, obtaining at least two second views of the object at a second time, determining a second defect fingerprint of the object based on the at least two second views, wherein the second defect fingerprint comprises defect features of the object and is determined using the convolutional neural network, and detecting the damage of the object based on a comparison of the first and second defect fingerprint. A corresponding system is disclosed.

## Description

### TECHNICAL FIELD

The present disclosure relates to a method and a system for detecting a damage of an object, in particular a car. The present disclosure also relates to a computer-readable storage medium.

### BACKGROUND

When a customer returns a rented car, the car rental company needs to check whether the customer has damaged the car during the rental time. For example, the customer may have had an accident where the car was scratched or dented. Currently, this check for damages is typically performed by a visual inspection by an employee of the car rental company. However, this is time-consuming and error-prone. For example, the employee may have overlooked that a scratch was present already before the customer has rented the car. Also, the customer may question the accuracy of the damage detection of the employee. Thus, there is a need for an automated and objective way of detecting damages.

### SUMMARY

A first aspect of the disclosure provides a method for detecting a damage of an object, the method comprising:
- obtaining at least two first views of the object at a first time,
- determining a first defect fingerprint based on the at least two initial views, wherein the first defect fingerprint comprises defect features of the object and is determined using a convolutional neural network,
- obtaining at least two second views of the object at a second time,
- determining a second defect fingerprint of the object based on the at least two second views, wherein the second defect fingerprint comprises defect features of the object and is determined using the convolutional neural network, and
- detecting the damage of the object based on a comparison of the first and second defect fingerprint.

Herein, a view may be an image, but is not limited to that. For example, the view may comprise infra-red information that is not in the human-visible spectrum. The view may have been obtained with a standard camera with a sensor and a lens directing incoming light to the sensor, but the view may also be obtained using laser-scanning of the object, i.e., emitting of laser-light towards the object and recording of reflected laser-light.

The object may be for example a car, a motorbike, a bicycle, a truck or another kind of automobile. The defect may be in particular a scratch, a dent, or a material that has been applied to the surface of the object.

Preferably, the at least two initial views correspond to at least two different angles. Obtaining the at least two initial views may be performed using a camera. The at least two initial views may correspond to a first and second picture taken of the object. However, there may also be just one panoramic picture that comprises the first and second view. Alternatively, obtaining the at least two initial views may be performed using a video camera, wherein frames at different times of the recorded video clip correspond to the first and second view.

The at least two later views may obtained in the same way as the at least two initial views.

The defect fingerprint comprises information that may be indicative of a damage of the object. For example, a high pass filter that emphasizes edges may create values that are indicative of scratches. Preferably, the defect fingerprint is indicative of different kinds of defects.

The convolutional neural network may be a pre-trained convolutional neural network, for example VGG-19.

Preferably, determining the defect fingerprint comprises applying a pre-trained convolutional neural network on a first view and a second view of the at least two initial views.

Preferably, the convolutional neural network has been trained using images of defects.

The outputs of the convolutional neural network trained with images of defects may then be used as defect fingerprint of the object. In other words, the outputs of the trained convolutional neural network may be used as defect features of the defect fingerprint. The defect fingerprint may comprise additional information obtained with other means.

Training the convolutional neural network with images of defects has the advantage that the outputs of the convolutional neural network are indicative of defects, and not e.g. indicative of a bright color of the car. In other words, a convolutional neural network trained with images of defects will give features that are more informative about defects than about other characteristics of the object.

Different kinds of defects can be trained separately. For example, training the convolutional neural network can comprise training the convolutional neural network with an output layer with different output layer neurons corresponding to different kinds of defects.

The same method is applied for determining the initial defect fingerprint based on the initial views and determining the later defect fingerprint based on the later views.

Defect features can be mostly determined by CNNs in terms of "defect class" (bump/scratch), size, position in the image, etc. In order to enrich this with the absolute position on the object (e.g. vehicle), additional algorithms (SLAM, Image Stitching, etc.) may be used if the image shows enough details.

Defect comparison can be performed via defect features, i.e. recognition via the individual, unique features of a specific defect (position irrelevant). Damage comparison can also be performed using a combination of the above points

Preferably, the views are images obtained with a camera, and the images are preprocessed before feeding them into the convolutional neural network. For example, particularly bright areas in the images may be reflections. These may be removed in order to avoid that the convolutional neural network detects these bright reflections as defects.

In a further implementation of the first aspect, the method further comprises determining a first identity fingerprint based on the at least two first views, determining a second identity fingerprint based on the at least two second views, and verifying an identity of the object using the first identity fingerprint and the second identity fingerprint. The identity fingerprint may comprise characteristics of the object. For example, the identity fingerprint may comprise a plurality of identity features of the object, wherein the identity features are characteristic for the identity of the object. When the object is a car, such identity features may include a color, a number plate, a type of the shape of the car, and/or a list of the existing defects (including e.g. position, type and size of each defect). Preferably, different convolutional neural networks are used for determining the identity of the object and for determining damages to the object.

For example, a convolutional neural network may be configured to locate the number plate and/or chassis number in an image, followed by a further neural network for text recognition and extraction of the number plate / chassis number.

Detecting the color of a car may include one or more of the following steps:
i. Localization of the car in the image (again with CNN) -> query of the average pixel color (or median)
ii. Classification of car color (also with CNN)
iii. Directly averaged color value from photo
iv. User selects pixels from image

Detecting the shape of the car may include a comparison of SLAM point clouds or training of special neural networks (Siamese Neural Networks), which are used e.g. by Face ID on the iPhone to compare the identity/constitution of two objects.

In a further implementation, the method further comprises retrieving a third identity fingerprint of the object from a remote storage, wherein the identity of the object is verified using the third identity fingerprint and at least one of the first identity fingerprint and the second identity fingerprint. Thus, the third fingerprint may be seen as an identity fingerprint, which allows identifying the car.

For example, if the object is a car, a car rental company can obtain an identity fingerprint of the car and store this is in the cloud, i.e., it is stored in a place that is remote from where the object is located. Subsequently, based on identity fingerprints that are obtained based on the first or second views of the car, the car rental company can determine whether this is the same car that is registered in the database in the cloud. In particular, Blockchain technologies may be used to store the fingerprints in the cloud in a tamper-proof manner.

In a further implementation, at least one of the first, the second, and the third identity fingerprints include one or more characteristics of the object. The characteristics of the object may include spatial features such as a size and/or a shape of the object. The characteristics of the object may also include visual features such as a color of the object. The characteristics of the object may also include defect features. For example, a large scratch or dent in the car may be considered as a characteristic of the car.

The identity features may be stored in the remote storage in an encrypted manner. For example, in specific embodiments, a hash of the identity features may be stored in the cloud.

In an implementation of the first aspect, obtaining the views of the object comprises moving a camera along at least two positions, wherein the at least two positions correspond to at least two predetermined angles relative to the object.

Moving the camera can be performed manually by a user and/or automatically by a system that is mounted.

In an implementation of the first aspect, the method further comprises instructing a user to move a mobile camera along at least two positions.

For example, the instructions may be shown on the screen of a mobile device, in particular a mobile phone, or being output by a loudspeaker of the mobile device. The instructions may comprise simple commands such as "move to the left", "step forward", and "lower the camera". The user may also be instructed to point the camera to specific parts of the object. For example, if the object is a car, the user may be instructed to point the camera to the front, side or back of the car.

In an implementation of the first aspect, after a potential defect has been detected, the method further comprises instructing a user to move the camera to obtain a closer view of the detected defect.

In this way, the defect fingerprint can be updated and it can be verified whether the detected potential defect is indeed a defect.

In embodiments, the method further comprises, after a defect has been created, creating a detailed defect fingerprint that is specific to the detected defect, wherein the detailed defect fingerprint may comprise more detailed information than the fingerprint of the object.

In an implementation of the first aspect, the method may further comprise aligning the at least two second views with the at least two first views.

Since the first and second views are obtained at different time points (and possibly by different users), they may have been obtained from different positions or with a different angle towards the object. Aligning the views (for example: aligning the images of the second views with images of the first views) has the effect that elements in the first view are aligned with these elements in the aligned second view. This has the advantage that a defect will appear in the same location of an initial view and a later view. Thus, the first defect fingerprint will more closely match the second defect fingerprint - unless new defects have been added to the object.

In an implementation of the first aspect, the method further comprises, when the second views have been obtained, sending a signal to a car gate. For example, the signal may instruct the car gate to open the gate. Thus, the car may be still while the second views are obtained, and allowed to move once obtaining of the second views is finished.

A second aspect of the disclosure provides a system for detecting a damage of an object, the system comprising:
- a view obtaining unit for obtaining views of the object,
- a fingerprint determination unit for determining a defect fingerprint of the object based on views of the object, wherein the defect fingerprint is determined using a convolutional neural network and characterizes defect features of the object, and
- a damage detection unit for detecting a damage of the object based on a comparison of a first defect fingerprint determined based on first views of the object and a second defect fingerprint obtained determined based on second views of the object.

The system of the second aspect can be configured to carry out the method of the first aspect or any of its implementations.

The view obtaining unit may comprise a camera and/or may comprise an input for reading images from a storage and/or from a network.

The fingerprint determination unit may be further configured to acquire identity features, which comprise characteristics of the object.

The object may comprise markers that allow the view obtaining unit to determine an orientation of the object. Thus, even if during first and second view the object is placed in different orientations relative to the camera, corresponding view information may be obtained.

In an implementation of the second aspect, the view obtaining unit comprises a camera, in particular a time-of-flight camera and/or a laser scanner. Time-of-flight cameras and/or a laser scanners have shown to be particularly useful for detecting dents of the object.

The view obtaining unit may also comprise a LIDAR system. In particular, the LIDAR system may be installed at an elevated position, e.g. on a pole. The view obtaining unit may be configured to obtain information using different modalities, e.g. Time-of-Flight and LIDAR, and combine these information to obtain the at least two first and second views.

In a further implementation, the camera is movably mounted, and the view obtaining unit is configured to control the camera to move around the object. Thus, it is possible with one camera to obtain different views, which cover the object from different angles.

In a further implementation, the view obtaining unit is configured to: if a defect of the object has been detected, move a field of view of the camera towards the detected defect. Thus, the system can first obtain a coarse view of the object and obtain a closer view of places where a defect has been detected. Moving the field of view of the camera can be performed for example by moving the entire camera, moving a lens, or moving a focus area of the camera.

In a further implementation, the system comprises a car gate and a camera, wherein the camera is arranged such that when the car is standing before the car gate, it is within a field-of-view of the camera. Thus, the views of the car may be obtained when the car is standing before the gate. Thus, motion artefacts in the views are avoided.

A third aspect of the disclosure refers to a computer-readable storage medium storing program code, the program code comprising instructions for carrying out the method of the first aspect or one of the implementations of the first aspect.

### BRIEF DESCRIPTION OF THE DRAWINGS

To illustrate the technical features of embodiments of the present disclosure more clearly, the accompanying drawings provided for describing the embodiments are introduced briefly in the following. The accompanying drawings in the following description are merely some embodiments of the present disclosure, modifications on these embodiments are possible without departing from the scope of the present disclosure as defined in the claims.
- FIG. 1: is a flow chart of a method for detecting a damage of an object,
- FIG. 2A: is a schematic drawings of a system for detecting a damage of an object,
- FIG. 2B: is a schematic drawings of a system for detecting a damage of an object, where a user has moved based on instructions from the system,
- FIG. 3: is a schematic drawing of a further system for detecting a damage of an object, and
- FIG. 4: is a schematic block diagram of processing of views in a system for detecting a damage of an object.

### DETAILED DESCRIPTION OF EMBODIMENTS

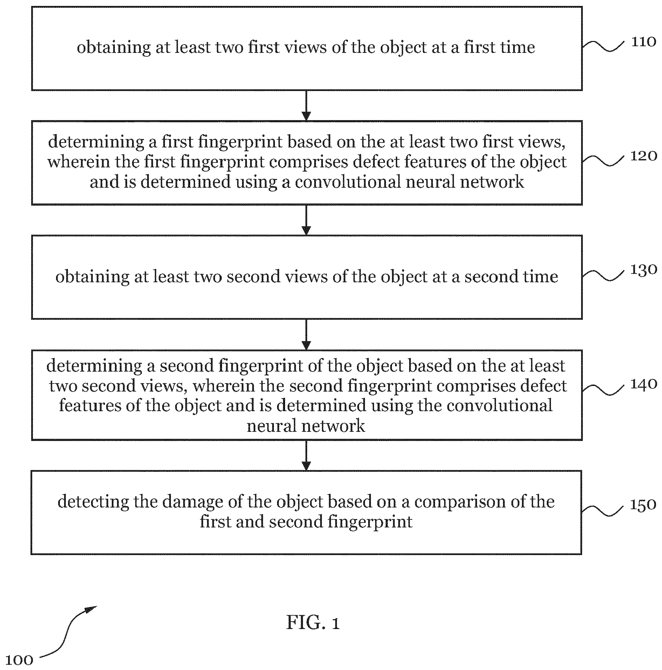

FIG. 1 shows a flow chart of a method 100. The method 100 comprises a first step 110 of obtaining at least two first views of the object at a first time. When the object is for example a car, the first time may be when the customer picks up the car at a parking lot, e.g. the parking lot of a car rental company.

Images of the surface to be tested are taken, which are then evaluated and evaluated with the aid of a neural network. The aim is to determine whether damage exists and, if so, what character this damage has and where it is located on the object. Finally, the user is informed of the result.

In this embodiment, the neural network is able to detect damage or changes on surfaces primarily by means of images. Preferably, the images are created using a camera.

On the one hand, the images can be generated using a hardware solution that is also available. For example, a "camera box" can recognize that the correct and relevant object has to be approached and scanned, e.g. when a car is being returning and is being recognized by the system. For this purpose, a camera can be installed at the entrance of a parking lot. In this way, an existing system can be upgraded with a "camera box".

In another embodiment, a mobile terminal is specifically designed for image creation in order to enable image recording. For example, this may be a standard smartphone that is specifically configured for the purpose of scratch detection. There may also be additional hardware features involved, e.g. a mount for the smartphone. The mount may be configured such that the smart phone's camera has a good angle for viewing the car. Preferably, the mount is moveable such that the camera can obtain images from the object from different angles. Preferably, the mount is controlled by a controller such that camera obtains images of the object based on a set of predefined angles. Preferably, the set of predefined angles is selected such that all relevant surfaces are covered with the images corresponding to the set of predefined angles.

It is also conceivable that an additional mounting module for the mobile phone facilitates image creation (e.g. automatically aligning the mobile phone to a certain angle).

On the other hand, it is conceivable that the images are created via a standard mobile device (e.g. smartphone) of a user. In this case, preferably, no external mounting device is needed for the smartphone. Instead, the user can move the mobile device around the object in order to obtain images that correspond to different angles.

Preferably, the image creation process for obtaining the views is performed such that the images show as few light reflections as possible.

Preferably, a method for obtaining the images is performed differently at night compared to during the day. For example, a program that gives instructions to the user may give different instructions based on a time of day, or based on whether ambient light detected from a light sensor is higher than a predetermined threshold.

The instruction program may be configured to give instructions that two images of one damage must be taken from different angles - here the reflection changes, but damage remains.

The instruction program may comprise instructions to ensure that the object to be checked has been completely scanned. In this regard, a procedure may be implemented that ensures that the pictures are prepared in such a way that contrasts are particularly emphasized on the pictures, whereby damages come out particularly well. For example, pictures in the infrared range may be used. In order to improve the image acquisition capabilities of a mobile device, special filters may be installed next to the lens of the camera of the mobile device.

Alternatively, or in addition to the hardware filters, filtering by software may be used in order to more clearly recognize damages of the object.

Preferably, "time of flight" information, e.g. as provided by recent Apple iPhone mobile phones, is used. This makes it possible to better determine the mobile phone position in the image creation process by the user and thus to optimize it. Furthermore, this has the advantage that certain damages, e.g. dents in the surface of the object can be detected more reliably.

The program may be configured to detect not only damages such as scratches, dents or broken parts, but also detect different materials. For example, it may detect that where a metal sheet is expected, the surface of the object instead comprises a different material.

Instead of time of flight-information, other sources of information for obtaining 3D information may be used. For example, two or more standard cameras may be used, wherein the two or more cameras are located at different positions. Thus, based e.g. on the differences of the images obtained from the different cameras, information about the shape of the object can be obtained. Alternatively, or additionally, structured light can be sent out towards the object and a shape of the object is determined based on the measured reflected light.

Embodiments include measurements against tampering with the images. For example, if the image is created by the user, e.g. using a mobile device of the user, mechanisms can be provided that ensure that the user actually creates the image from the "right" object. It must therefore be prevented that the user, e.g. to cover up a damage, photographs another identical object and passes it off as the correct object. This can be ensured by different processes:
In embodiments, a recognition feature can be defined on the object (e.g. a number plate on the car, a chassis number in the windscreen, or a QR code). The user must start the image creation process at the recognition feature and then point the camera at the object (e.g. car) without interruption during the entire image creation process. Otherwise, image creation will be canceled.

This also includes the consideration of whether the object should be equipped with further features to enable recognition. For example, a special light source can be installed in the interior of a car, which is then recognized by the device.

Alternatively, satellite tracking, such as GPS or Galileo, may be used to ensure that while the user acquires the images, user and the imaged object are at the same location or within a predetermined distance.

Furthermore, an environment radius can be defined around the object. The user must be within this environment radius be in order to be able to take the pictures at all. This can be ensured, for example, by an appropriate radio source. As an example, a transmitter can be installed in the car with which the user must connect to in order to run through the image creation process. If the device leaves this range, the process is automatically aborted.

In further embodiments, an "identity fingerprint" of the object is created. This fingerprint may be based on characteristics that are unique for this object. For example, there may be many Volkswagen Golf cars in a certain color, however, certain existing damages may be unique to the car. In embodiments, also the license plate may be used as fingerprint, or as part of the fingerprint.

The process of determining the identity fingerprint of an object may be in general described as finding individual characteristics of an object and comparing them. For example, an "identity fingerprint" could be created on the car by an individual color, features and/or damage pattern, so that the technology can always compare whether the right vehicle is scanned.

In a second step 120 of the method 100, a first defect fingerprint is determined based on the at least two first views, wherein the first defect fingerprint comprises defect features of the object and is determined using a convolutional neural network. Determining the first defect fingerprint may comprise taking a picture of the object, e.g. the car. However, in other embodiments, a pre-stored first defect fingerprint, e.g. from a previous return of the rental car, may be used. For example, the pre-stored first defect fingerprint may be obtained from

In a third step 130, at least two second views of the object are obtained at a second time. The second time is a point in time after the first time. When the object is for example a car, the second time may be when a customer returns the car to the parking lot, e.g. the parking lot of the rental company.

In a fourth step 140, a second defect fingerprint of the object is determined based on the at least two second views, wherein the second defect fingerprint comprises defect features of the object and is determined using the convolutional neural network. The convolutional neural network may be the convolutional neural network used for obtaining the first defect fingerprint in step 120, however, in embodiments the convolutional neural network may be different from the convolutional neural network used in step 120. For example, different parameters, different coefficients and/or even a structurally different convolutional neural network may be used.

In a fifth step 150, the damage of the object is detected based on a comparison of the first and second defect fingerprint. Since the features of the fingerprint indicate the presence of certain defects, a comparison of the first and second defect fingerprint, in particular a comparison of the features of the first defect fingerprint with the features of the second defect fingerprint can help identify whether a new damage has occurred. For example, a damage may be detected if a sum, a weighted sum, or a squared sum of the differences of the values of the features of the first and second defect fingerprint is higher than a predetermined threshold.

The detected damages can be shown on the device that is also used for obtaining the images. The determined location of the damage can be shown as a "border" around the damage, with classification and location. The visualization can take place on a 3D image of the object, or on a 3D sketch (schematic image).

Documentation of the detected damages can be sent automatically by e-mail. Detailed documentation about the detected damages can be available in an account of the user.

Preferably, damage detection takes place in real time, i.e. the damage is immediately displayed to the user on the display of the imaging device or on the lenses of glasses. Preferably, the damages are shown overlaid over the object, in an augmented reality fashion.

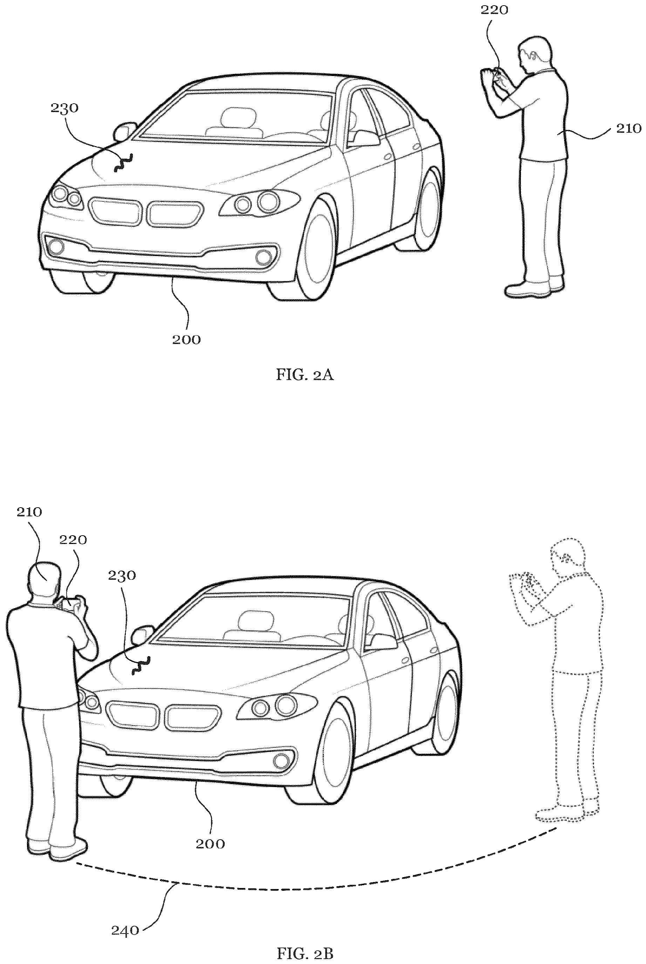

FIG. 2A is a schematic drawing of a car 200 and a person 210 with a mobile device 220. The person has started an application on the mobile device 220 and is recording a picture of the side of the car 200. The car 200 has a damage 230, however, this is not visible on the picture that the person 210 is currently recording.

In embodiments, the neural network may be able to detect damage to an object even if it has never seen this object before (in an undamaged state). This is because a damage typically represents an anomaly and the neural network may have been trained to detect anomalies.

In addition, the method is able to compare a new damage during a user process, i.e. either to recognize it again or to determine it again (= recognition of a change).

In addition to detecting a damage to the object, the method can also classify the object, e.g. damage yes/no; dent large or dent small; scratch large or scratch small.

In addition, the damage should also be localized in order to enable a precise allocation (especially relevant for car rentals; leasing returns). Damage should therefore not only be classified, but also localized. For this purpose, a second neural network can be used, which detects and outputs the position of the damage on the vehicle or another object to be checked. In order to ensure an exact position determination of several damages, a combination of neural network and SLAM technology and/or Time of Flight technology may be used.

Preferably, if and as soon as damage is detected by the method, the damage is also measured according to its extent (e.g. the diameter of the dent, the length of the scratch). Preferably, this can be performed using SLAM technology.

Once sufficient view information from this side of the car has been obtained the mobile device 220 instructs the user to move around the car and obtain further image information from the car. For example, the mobile device may generate voice output such as "step to the left", "move towards the front of the car" or "move closer to the car". Additionally, or alternatively, visual guidance can be provided to the user.

FIG. 2B is a schematic drawing of the car 200 and the person 210 of FIG. 2A at a later time. Now, the person 210 has moved along a path 240 to a new position. In this new position, the mobile device 220 of the person is directed towards the front of the car, and the view now acquired by the mobile device 220 captures the damage 230.

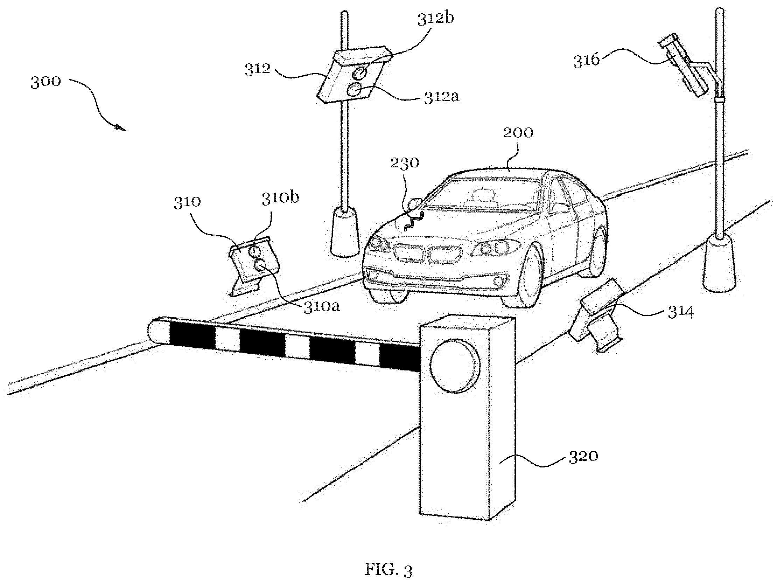

FIG. 3 is a schematic drawing of system 300 for detecting damages of a car. This system can work fully automatic, i.e. there is no need for a person obtaining the view information from the car. The system comprises a set of cameras 310, 312, 314, 316 that are directed towards the car 200. Each of the cameras comprises a light emission part 310a, 312a and a light sensing part 310b, 312b. In other embodiments, the cameras may omit the light emitting part. Using light emitters integrated into the cameras has the advantage that a specific kind of light can be emitted (e.g. infrared light), which may be particularly useful for detecting certain kinds of damages. Furthermore, by using light emission from the cameras, the angle of the light incidence on the car is consistent, whereas e.g. the direction of the sun light onto the car will change depending of the time of the day. The light emitter may use a diffusor so that diffuse light is generated and sharp edges in the reflection on the car are avoided.

Two cameras 310, 314 are arranged to obtain views of the car from the bottom, whereas two further cameras 312, 316 are arranged on poles and obtain views of the car from the top.

The system 300 further comprises a car gate 320 which in FIG. 3 is shown in closed position. Because the gate is closed, the car cannot move further and the cameras can acquire still images, which have a higher quality than image when the object is moving. The cameras 310, 312, 314, 316 provide view information to a controller (not shown in FIG. 3), which controls the car gate 320 to open once sufficient view information for damage detection has been obtained. For example, the gate 320 could be arranged at the entrance of a car park of the car rental company. Thus, when the car arrives at the final parking position, the rental company could already be informed that and where the car 200 has a damage.

In other embodiments, the views of the car are obtained while the car is moving, i.e., there is no need for a gate to stop the car.

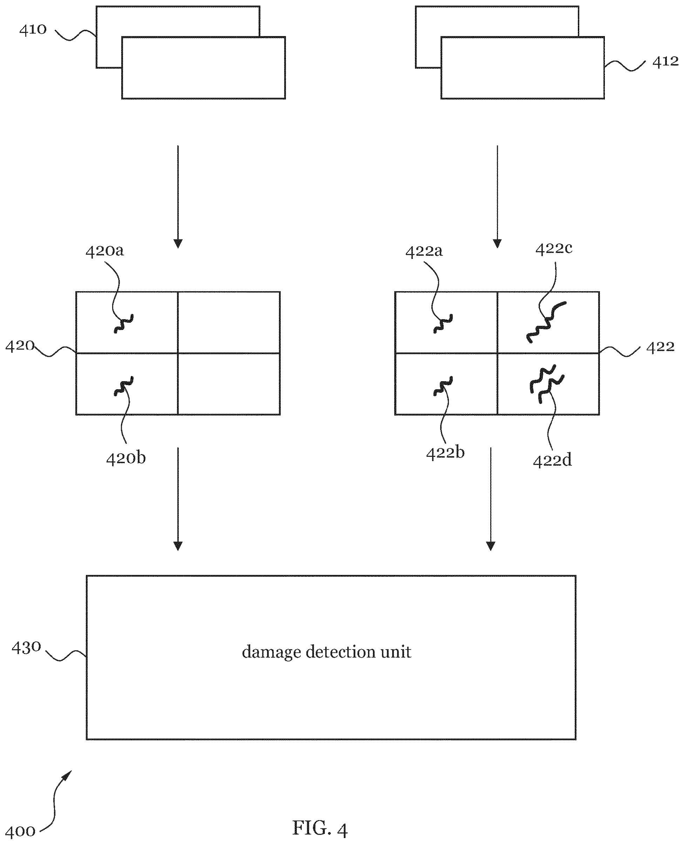

FIG. 4 is a schematic block diagram 400 of processing of views 410, 412 in a system for detecting a damage of an object. First views 410 are processed to determine a first defect fingerprint 420. The first defect fingerprint 420 shown schematically in FIG. 4 comprises information about a first defect 420a and a second defect 420b.

At a later point in time, second views 412 are acquired. Based on the second views 412, a second defect fingerprint 422 is determined. The second defect fingerprint 422 comprises information about four defects 422a, 422b, 422c, 422d. By comparing the first defect fingerprint 420 with the second defect fingerprint 422, a damage detection unit 430 can determine that the third and fourth defects 422C, 422b were not present when the first views 410 were obtain. Thus, the damage detection unit 430 may output the information two new damages were detected.

While some embodiments have been described in detail it is to be understood that aspects of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

## Claims

1. Method (100) for detecting a damage (230) of an object (200), the method comprising:
- obtaining (110) at least two first views (410) of the object at a first time,
- determining (120) a first defect fingerprint (420) based on the at least two first views, wherein the first defect fingerprint comprises defect features of the object and is determined using a convolutional neural network,
- obtaining (130) at least two second views (412) of the object at a second time,
- determining (140) a second defect fingerprint (422) of the object based on the at least two second views, wherein the second defect fingerprint comprises defect features of the object and is determined using the convolutional neural network, and
- detecting (150) the damage (230) of the object based on a comparison of the first and second defect fingerprint.

2. The method of claim 1, further comprising determining a first identity fingerprint based on the at least two first views (410), determining a second identity fingerprint based on the at least two second views (412), and verifying an identity of the object (200) using the first identity fingerprint and the second identity fingerprint.

3. The method of claim 2, wherein the damage (230) is detected (150) only if the identity of the object (200) is verified.

4. The method of claim 2 or 3, further comprising retrieving a third identity fingerprint of the object (200) from a remote storage, wherein the identity of the object (200) is verified using the third identity fingerprint and at least one of the first identity fingerprint and the second identity fingerprint.

5. The method of one of claims 2 to 4, wherein at least one of the first, the second, and the third identity fingerprints include one or more characteristics of the object.

6. The method (100) of one of the previous claims, wherein obtaining the views (410, 412) of the object comprises moving a camera along at least two positions, wherein the at least two positions correspond to at least two predetermined angles relative to the object, preferably further comprising instructing a user to move a mobile camera along the at least two positions.

7. The method (100) of one of the previous claims, further comprising detecting a potential defect and instructing a user to move the camera (310, 312) to obtain a closer view of the detected potential defect.

8. The method (100) of one of the previous claims, further comprising aligning the at least two second views (412) with the at least two first views (410).

9. The method (100) of one of the previous claims, further comprising, when the second views (412) have been obtained, sending a signal to a car gate.

10. System (300) for detecting a damage (230) of an object (200), the system comprising:
- a view obtaining unit (310-316) for obtaining views (410, 412) of the object,
- a fingerprint determination unit for determining a defect fingerprint (420, 422) of the object based on views of the object, wherein the defect fingerprint is determined using a convolutional neural network and characterizes defect features of the object, and
- a damage detection unit (430) for detecting a damage of the object based on a comparison of a first defect fingerprint determined based on first views of the object and a second defect fingerprint determined based on second views of the object.

11. The system (300) of claim 10, wherein the view obtaining unit comprises a camera, in particular a time-of-flight camera and/or a laser scanner.

12. The system (300) of claim 9 or 10, wherein the view obtaining unit is configured to: if a defect of the object has been detected, move a field of view of the camera towards the detected defect.

13. The system (300) of one of claims 9 to 12, wherein the system comprises a first and a second camera (310-316), which are arranged on opposite sides of a road.

14. The system (300) of one of claims 9 to 13, wherein the object (200) is a car and the system comprises a car gate (320) and a camera (310, 312), wherein the camera is arranged such that when the car is standing before the car gate, it is within a field-of-view of the camera.

15. A computer-readable storage medium storing program code, the program code comprising instructions that when executed by a processor carry out the method (100) of one of claims 1 to 9.
